# EUROPEAN PATENT APPLICATION

(11) **EP 1 059 585 A2**
(43) Date of publication of application: **13.12.2000**
(21) Application number: 00304712.3
(22) Date of filing: 02.06.2000
(51) Int. Cl.: G06F 13/10

(54) **Virtual 16550 uart**

(30) Priority: 03.06.1999 US 324945
(71) Applicant: PC-Tel, Inc., San Jose, California 95134 (US)
(72) Inventor: Luo, Xiaohua, San Jose, California 95131 (US)
(74) Representative: Freeman, Jacqueline Carol

(57) **Abstract**

A serial device such as a host signal processing modem includes a software emulation of a 16550 UART and a callback procedure that responds to specific accesses to the COM port assigned to the host signal processing modem. The response of the callback procedure is the same response that a 16550 modem would provide. Accordingly, programs accessing the communication port to determine the type of UART attached to the COM port determine a 16550 UART is present.

## Description

### COPYRIGHT NOTICE

A portion of the disclosure of this patent document contains material which is subject to copyright protection. The copyright owner has no objection to the facsimile reproduction by anyone of the patent document or the patent disclosure, as it appears in the Patent and Trademark Office patent files or records, but otherwise reserves all copyright rights whatsoever.

### BACKGROUND

### Field of the Invention

This invention relates to computer systems and particularly to methods for using software to emulate a hardware UART.

### Description of Related Art

A computer system commonly includes serial input/output (I/O) devices such as a printer, a modem, and a mouse, and runs an operating system such as MICROSOFT® WINDOWS® 9x that provides for standardized connections to serial devices. In particular, WINDOWS® and MS-DOS support four communication or COM ports, each having a corresponding base device address. Each COM port is for connection to a serial device that is expected to contain a communication interface known as a Universal Asynchronous Receiver/ Transceiver (UART). The UART is well known in the art and described, for example, in the 1994 "Telecommunication Data Book" from National Semiconductor Corporation, which is incorporated by reference herein in its entirety. Such UARTs come in two varieties, an 8250 UART and a 16550 UART, that differ in data rate.

Including a hardware UART in some serial devices is inefficient and therefore adds unnecessary expense. For example, in a host signal processing (HSP) modem, a driver or other software executed by a host computer performs many of the functions traditionally performed by modem hardware. In particular, the software directly receives and sends communications that in a conventional modem, would pass through a UART to modem hardware. Accordingly, software UART emulations have been developed to permit an HSP mode that lacks a hardware UART to perform like a conventional modem. U.S. patent No. 5,787,305, issued July 28, 1998 describes one HSP modem using a software UART. With a software UART, the HSP modem can have a non-standard hardware interface that is better suited for the HSP modem. The non-standard interface does not need to perform or respond as would a UART.

A UART emulation in an HSP modem preferably performs in a manner such that any differences between a conventional modem and the HSP modem are transparent to a user and programs, including applications and the operating system, which may interact with modems. A difficulty in making a UART emulation that is transparent to a program arises when the program attempts to directly access addresses expected to correspond to a UART. One reason a program might have for directly accessing the register set of a UART is to determine whether the UART is a 16550 or 8250 UART. In particular, a hardware 16550 UART has a FIFO control register (FCR) that corresponds to the base address of the UART plus an offset (specifically base+02). (The same address in an 8250 or 16650 UART also corresponds an IIR register that is a read-only register and only valid when an IRQ is generated.) Writing a specific value (0xc1) to the address corresponding to the FCR of a 16550 UART enables a FIFO in the UART and sets the FIFO size to 14 bytes. Later reading the FCR from the 16550 UART should return the value written. However, a 8250 UART returns a different value (0x00) even after an application writes the same value (0xc1) to the same address (base+02). Accordingly, a program can test whether a UART is a 8250 or 16550 UART by writing to the address corresponding to the FCR in a 16550 UART, reading from that address, and determining whether the value read indicates a 16550 or 8250 UART.

A software UART for an HSP modem is conventionally part of a driver for the HSP modem and responds to applications and the operating system . Direct access of addresses purportedly assigned to the UART accesses the non-standard interface which typically returns a value that is inappropriate for a UART. Accordingly, the program may incorrectly identify a modem as having a 8250 UART or an unidentified UART type, and based on that determination fail to take advantage of the full capabilities of software emulation of a 16550 UART. Accordingly, an HSP modem that avoids this incorrect identification can provide higher performance when used with programs that checks the FCR as described above.

### SUMMARY

In accordance with an aspect of the invention, a serial device such as a host signal processing modem includes a software emulation of a 16550 UART and a callback procedure that responds to accesses (reads and writes) to the COM port assigned to the host signal processing modem. The response of the callback procedure is the same response that a 16550 UART would provide. Accordingly, programs accessing the communication port to determine that a 16550 UART is present.

One embodiment of the invention is a method for emulating a UART. The method includes: installing a callback procedure in a computer system; and executing the callback procedure in response to instructions that reference an address associated with a communication port. In response to an instruction reading from the address associated with the communication port, the callback procedure returns a value that a hardware UART (for example, a 16550 UART) would return. The method may further include attaching hardware to a computer system via a non-standard interface; assigning the communication port to the hardware; and providing a driver for the hardware. The non-standard interface fails to comply with the conventions established for a UART, but the driver includes a UART emulation for communication with programs expecting the hardware to include a standard UART. In one specific embodiment, the driver is a software portion of a host signal processing modem, and the hardware is a hardware portion of the host signal processing modem. Current computer systems with operating systems such as Windows 9x have system utilities that facilitate installation of the callback procedure.

In accordance with another embodiment of the invention, a host signal processing modem includes: a driver and a callback procedure for execution in a host computer. The driver includes a UART emulation and modem software that the host computer executes for normal modem operations. The host computer executes the callback procedure in response to direct accesses of an address corresponding to the host signal processing modem, in particular, when a program directly accesses addresses corresponding to modem hardware to determine whether the modem includes a 8250 or 16550 UART. The callback procedure responds to the access as would a UART of the type that the UART emulation emulates.

### BRIEF DESCRIPTION OF THE DRAWINGS

Fig. 1 is a block diagram of a computer system in accordance with an embodiment of the invention.

Fig. 2 is a flow diagram of a process for using an HSP modem in accordance to an embodiment of the invention.

### DETAILED DESCRIPTION

In accordance with an embodiment of the invention, a software or host signal processing (HSP) modem installs a callback procedure to trap an address or I/O port corresponding to the modem. During an access of an address corresponding to the modem, the callback procedure trap the access and responds to reads in accordance behavior of a UART emulated in the HSP modem. Accordingly, programs that directly access the port expecting to find a UART, identify the HSP modem as having a UART of the type emulated.

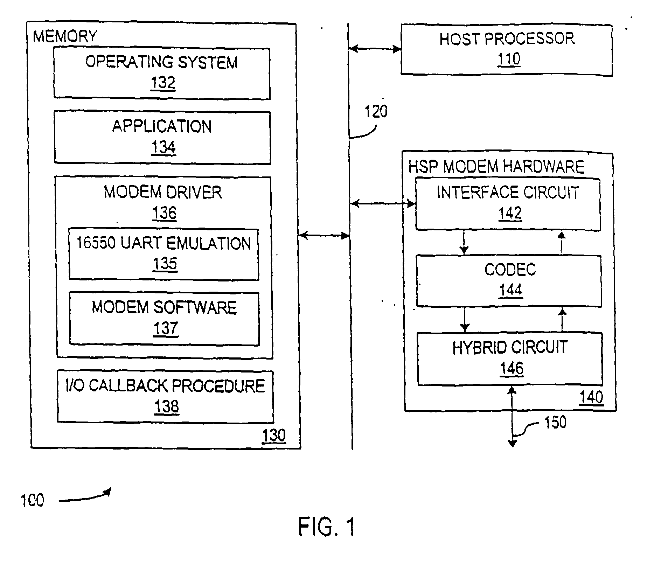

Fig 1 is a block diagram of a computer system 100 implementing an embodiment of the invention. In an exemplary embodiment, computer system 100 is a personal computer that includes a x86 type processor 110 such as a processor from the PENTIUM® family of processor available from Intel, Inc. or the K6 family of processors available from Advanced Micro-Devices, Inc. Processor 110 connects to a bus system 120 for communications with other devices in computer system 100. Fig. 1 illustrates bus system 120 as a single bus to which a memory 130 and HSP modem hardware 140 connects. However, bus system 120 may include several buses including but not limited to an ISA bus or a PCI bus to which HSP modem hardware 140 connects. In addition, processor 110 would typically connect through bus system 120 to other devices such as video and sound cards (not shown).

Memory 132 is typically implemented as a hierarchical memory system including one or more level of caches, a main memory, and auxiliary memory devices such as a disk drive or tape back-up device. Memory 130 stores programs and data for processor 110. Fig. 1 shows memory 130 as including programs including an operating system 132, an application 134, a HSP modem driver 136, and an I/O call back procedure 138. Operating system 132 is a conventional operating system such as Microsoft Windows 95 or 98 under which application 134 runs. Modem driver 135 complies with the requirements that operating system 132 sets for drivers. Additionally, modem driver 135 implements the primary modem functions. In particular, modem driver 135 includes a 16550 UART emulation 135 that accepts data and commands from operating system 132 and application 134 and passes received data back to application 134 or operating system 132. Additionally, modem driver 136 includes modem software 137 that implements primary modem functions such as modulation that converts data into samples representing an analog signal for transmission and demodulation of a received signal as represent series of samples from HSP modem hardware 140. Known modem software implements a variety of communication protocols, and one specific embodiment of modem software is described in U.S. patent Ser. No. 5,721,830, which is hereby incorporated by reference in its entirety.

Digital information (e.g., samples of the transmitted and received communication signal) flow between modem driver 136 and HSP modem hardware 140 either as a result of an interrupt routine that writes and reads from HSP modem hardware 140 or as a result of DMA or similar transfers. U.S. patent App. Ser. No. 09/010,813, entitled "Host Signal Processing Modem Using a Software Circular Buffer and Direct Transfers of Samples to Maintain a Communication Signal," describes an HSP modem using direct transfers between hardware and software portions of the modem and is hereby incorporated by reference in its entirety.

HSP modem hardware 140 includes an interface circuit 142, a codec 144, and a hybrid circuit 146. Hybrid circuit 146 connects to and provides an interface for transmitting and receiving communication signals via telephone lines 150. Codec 144 performs digital-to-analog conversions that generate an analog communication signal for transmission on telephone lines 150 and analog-to-digital conversions that generate samples of the analog communication signal received on telephone lines 150. Interface circuit 142 communicates with codec 144 and the rest of computer system 100. In particular, interface circuit 142 communicates with modem driver 136 via bus system 120 and has a non-standard interface customized for that purpose. To improve efficiency and reduce cost, interface circuit 142 does not implement the register set or conventions required of a UART. An example of a suitable interface circuit is the PCT789T-A available from PCtel, Inc.

For modems or transceivers implementing high data rate communication protocols such as Asymmetric Subscriber Loop (ADSL or G.992.1) and light rate ADSL (G.992.2), HSP modem hardware 140 may additionally include processing circuitry (not shown) such as described in U.S. patent App. Ser. No. 09/263,160, entitled "Hybrid Software/Hardware Discrete Multi-Tone Transceiver" and U.S. patent App. Ser. No. 09/240,981, entitled "Host Signal Processing Modem With A Signal Processing Accelerator," which are hereby incorporated by reference in their entirety.

In accordance with an aspect of the invention, system 100 includes an I/O callback procedure 138 that operating system 132 calls to trap accesses to the COM port corresponding to the modem. In particular host processor 110 generates an exception when an executed instruction references an address corresponding to any of the communication ports of system 100. Operating system (e.g., Windows 9x) responds to the exception by identifying the port corresponding to the exception address and calling a callback procedure corresponding to the identified port. In particular, operating system 132 calls callback procedure 138 in response to an access of the port corresponding to the modem. Callback procedure 138 responds to the access in the same manner as a 16550 UART. In particular, in response to a write to the FIFO control register (FCR), which has an address two greater than the base address of the port (base +2), callback procedure 138 records the value (e.g., Oxcl) written. In response to a following read of to the FIFO control register, callback procedure 138 returns the appropriate value (e.g., 0xc1). A program interprets the response of callback procedure 138 as the proper response for a 16550 UART and determines that the modem includes a 16550 UART.

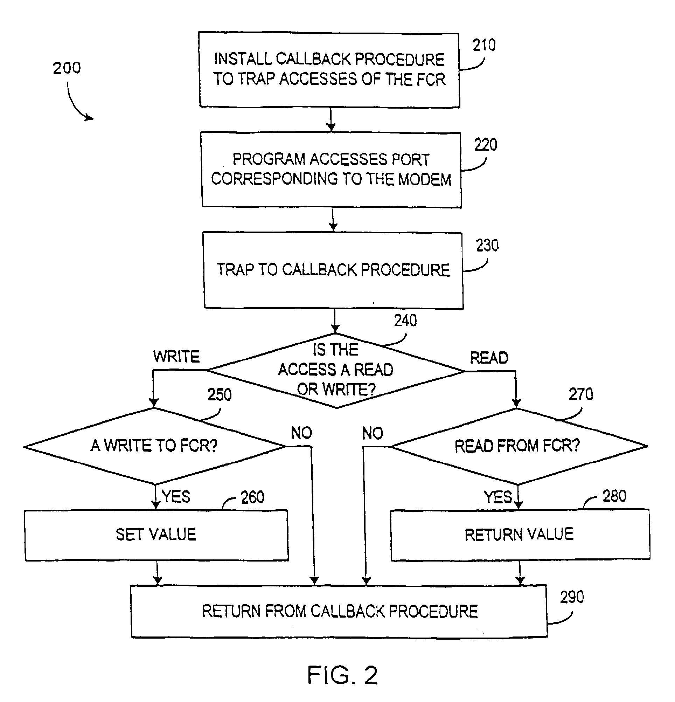

Fig. 2 shows a flow diagram of a process 200 in accordance with an embodiment of the invention. Process 200 starts with an installation operation 210, which occurs during initialization of an HSP modem or computer system 100. Modem driver 136 may for example include a routine that performs installation operation 210 during initialization. Installation operation 210 installs callback procedure 138 for the port assigned to the modem. After installation, computer system 100 continues normally until an access 220 when a program attempts to access the port corresponding to the modem. Such an access may occur when a control panel of the operating system attempt to determine the properties of the HSP modem. The attempted access 220 causes an exception that, in step 230, initiates a trap to callback procedure 138. In the Microsoft Windows 9x operating system, the virtual machine manager (VMM) handles such exceptions. When the VMM receives an instruction of access a port, the VMM checks an I/O permission map. If this port is trapped, the VMM passes the instruction to the call back procedure corresponding to the address accessed.

Steps 240, 250, 260, 270, 280, and 290 illustrate the flow of an embodiment of callback procedure 138. Step 240 determines whether the access causing the exception was a read or write. For a write, step 250 determines whether the instruction is writing to FCR of a 16550 UART. If so, step 260 sets a flag value in callback procedure 138, before callback procedure 138 ends in step 290. If the write is to another address, callback procedure 138 ends. For a read, step 270 determines whether the instruction is reading from the FCR address of a 16550 UART. If so, step 260 returns a value which emulates the 16550 UART FCR register behavior. For example, if value 0xc1 was written to the FCR, callback procedure 138 returns value 0xc1. Step 290 is a return from callback procedure 138, after which computer system continues normal operation.

In the Windows 9x operating system, a control panel determines the properties of the UART by checking the values of bits 7 and 6 of the value returned after writing value 0xc1 to the FCR and then reading the FCR Returned bit values 00 indicates an INS8250 UART. Bit values 01 indicate an unknown device. Bit values 10 indicate an NS16550 UART, and bit values 11 indicate an NS16550AN UART.

The appendix includes x86 assembly language listings of procedures InstallIOHandler and MyIOCallback. Procedure InstallIOHandler installs procedure MyIOCallback as the callback procedure for the I/O port (_ptbase) corresponding to an HSP modem. Procedure InstallIOHandler calls the routine Install_IO_Handler, which is available in the virtual machine manager (VMM) of the Microsoft Windows 95 and 98 operating systems. Procedure InstallIOHandler is part of a modem driver and executed when the driver is loaded. Procedure MyIOCallback is a callback procedure that handles accesses to the port corresponding to the modem and can also be part of modem driver. In this embodiment, procedure MyIOCallback only handles accesses corresponding to the address of an FCR of a UART, and the interface circuit of the modem hardware does not use that address.

Although the invention has been described with reference to particular embodiments, the description is only an example of the invention's application and should not be taken as a limitation. Various adaptations and combinations of features of the embodiments disclosed are within the scope of the invention as defined by the following claims.

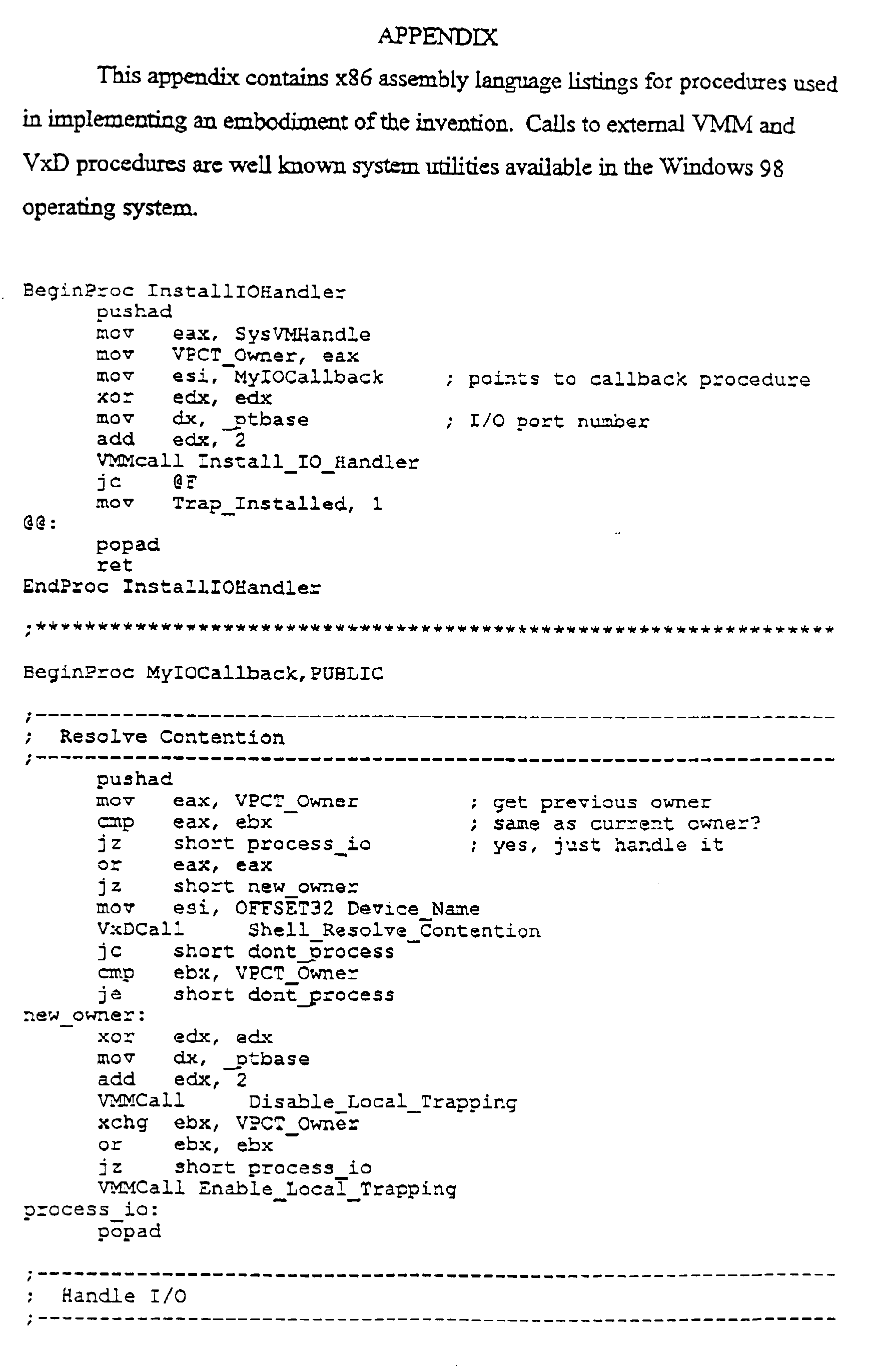

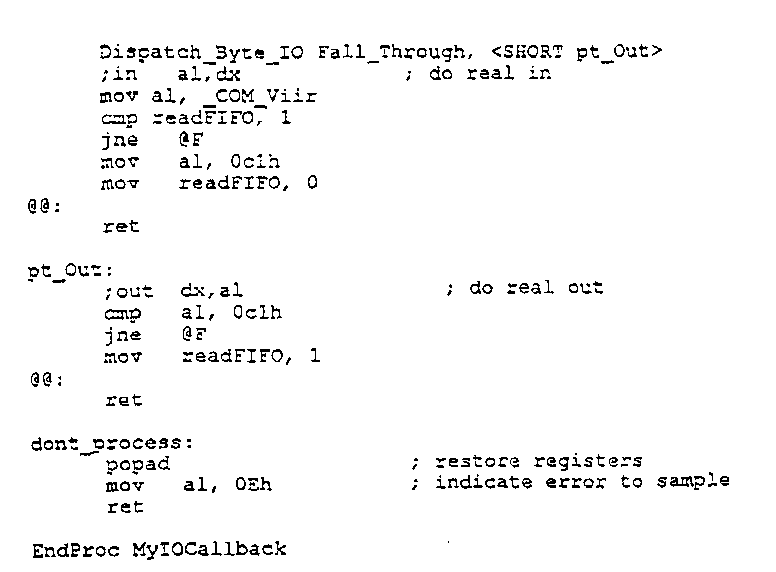

## Claims

1. A method for emulating a UART comprising:
installing a callback procedure in a computer system; and
executing the callback procedure in response to instructions that reference an address associated with a communication port, wherein executing the callback procedure comprises:
returning a value in response to an instruction reading from the address associated with the communication port, the value returned being a value that a hardware UART would return.

2. The method of claim 1, further comprising;
attaching hardware to a computer system via a non-standard interface in the hardware, wherein the non-standard interface fails to comply with the conventions established for a UART;
assigning the communication port to the hardware; and
providing a driver for the hardware, wherein the driver includes a UART emulation for communication with programs expecting the hardware to include a UART.

3. The method of claim 2, wherein:
the driver comprises a software portion of a modem; and
the hardware comprises a hardware portion of the modem.

4. The method of claim 1, 2 or 3 wherein returning the value in response to the instruction reading from the address associated with the communication port, comprises returning the value that a 16550 UART would return.

5. The method of claim 4, wherein the address corresponds to an address that a FIFO control buffer of a 16550 UART would have if connected the port assigned to the hardware.

6. The method of claim 1, 2, 3, 4 or 5 wherein installing the callback procedure comprises using system routines available in an operating system.

7. The method claim 6, wherein the operating system is a version of Microsoft Windows.

8. A host signal processing modem comprising:
a UART emulation;
modem software that communicates with the UART emulation and performs functions required for a modem protocol; and
a call back procedure executed in response to accesses of an address corresponding to the host signal processing modem, wherein the callback procedure responds to the access as would a UART that the UART emulation emulates.

9. The host signal processing modem of claim 8, wherein the address corresponds to a port assigned to the host signal processing modem.

10. The host signal processing modem of claim 9, further comprising hardware having an interface connected to respond to the address corresponding to the port, wherein the interface fails to comply with requirements for a UART.

11. The host signal processing modem of claim 8, 9 or 10 wherein the callback procedure responds to the access as would a 16550 UART.
